# FASCICULE DE BREVET EUROPEEN

(11) **EP 3 938 667 B1**
(45) Date de publication et mention de la délivrance du brevet: **28.02.2024**
(21) Numéro de dépôt: 20710144.5
(22) Date de dépôt: 11.03.2020
(51) Int. Cl.: F16B 31/00

(54) **DISPOSITIF PYROTECHNIQUE DE LIBÉRATION D'ÉCROU**
PYROTECHNISCHE VORRICHTUNG ZUM LÖSEN VON MUTTERN
PYROTECHNIC NUT RELEASING DEVICE

(30) Priorité: 15.03.2019 FR 1902722
(43) Date de publication de la demande: 19.01.2022
(73) Titulaire: Autoliv Development AB, 447 83 Vårgårda (SE)
(72) Inventeur: LINDBLOM, Christina, 46594 Nossebro (SE); WERGELAND, Clas, 44151 Alingsas (SE); ANDERSSON, Mikael, 44134 Alingsas (SE); AHLQVIST, Anders, 44734 Vargarda (SE)
(74) Mandataire: Poindron, Cyrille
(86) Numéro de dépôt international: PCT/EP2020/056472
(87) Numéro de publication internationale: WO 2020/187659

(56) Documents cités:
- EP-A1- 2 920 475
- EP-B1- 2 920 475
- DE-A1-102012 018 600
- JP-A- H04 208 700
- US-A- 3 952 626
- US-A1- 2012 045 291
- US-A1- 2012 076 614

## Description

La présente invention concerne le domaine des dispositifs pyrotechniques de séparation et plus particulièrement un dispositif pyrotechnique de libération d'écrou désigné également par boulon actif.

Les assemblages de boulons actifs ont été utilisés pour diverses applications et sont généralement sensibles à un signal de libération de composants sécurisés. Un boulon actif comprend souvent un actionneur pyrotechnique qui est actionné pour libérer les composants. Un assemblage typique peut comprendre un écrou dont les parties sont adaptées à un mouvement radial. Les parties d'écrou sont disposées à l'intérieur de l'ensemble de manière à retenir normalement un boulon. Lorsque l'actionneur est actionné de façon pyrotechnique, les parties de l'écrou se déplacent vers l'extérieur en réponse à une charge axiale sur le boulon. En conséquence, le boulon est libéré.

Le document US20120045291 décrit un boulon actif du type décrit ci-dessus. Plus particulièrement, ce document décrit un actionneur pyrotechnique formé d'un piston coulissant selon l'axe de la vis. Cet agencement nécessite un espace axial important.

. Un but de la présente invention est de répondre aux inconvénients du document de l'art antérieur mentionné ci-dessus et en particulier, de proposer un dispositif pyrotechnique de séparation d'élément plus compact.

Pour cela, un premier aspect de l'invention concerne un dispositif de libération d'écrou comprenant :
- des moyens d'actionnement pyrotechnique,
- un écrou agencé pour maintenir une vis comprenant un axe longitudinal
- un sectionneur agencé pour translater selon une direction d'activation, sous l'action des moyens d'actionnement pyrotechnique, de sorte à diviser l'écrou en au moins deux parties,
caractérisé en ce que
le mouvement de translation du sectionneur est situé dans un plan séquent avec l'axe longitudinal de la vis

Selon une autre variante de réalisation, le dispositif comprend un appui agencé pour soutenir l'écrou selon la direction d'activation du sectionneur. Cela permet d'éviter une sollicitation en flexion de la vis par l'intermédiaire de l'écrou lorsque celui-ci n'est pas encore divisé ou libéré de la vis. Cet appui permet en outre de maintenir l'écrou jusqu'à sa rupture ce qui améliore de processus de sollicitation et de rupture de l'écrou.

Selon une autre variante de réalisation, le dispositif comprend un appui agencé pour soutenir la vis selon la direction d'activation du sectionneur. Cet appui est agencé pour soutenir une extrémité de la vis ou une partie intermédiaire grâce à une ouverture dans ouverture dans le sectionneur.

Selon une autre variante de réalisation, l'appui comprend une tige dont l'axe longitudinal est sensiblement parallèle la direction d'activation et sensiblement perpendiculaire à l'axe longitudinal de la vis.

Selon une autre variante de réalisation, l'écrou est monobloc.

Selon une autre variante de réalisation, l'écrou comprend une zone de fragilisation agencée pour provoquer la division de l'écrou lors de l'actionnement du sectionneur.

Selon une autre variante de réalisation, le sectionneur est monté coulissant dans un boîtier, et le dispositif comprend des moyens d'amortissement agencés entre le boitier et le sectionneur pour amortir le mouvement du sectionneur lors de l'activation des moyens pyrotechniques.

Selon une autre variante de réalisation, les moyens d'actionnement pyrotechnique comprennent un piston agencé pour translater le sectionneur selon la direction d'activation.

Selon une autre variante de réalisation, le piston et le sectionneur forment une seule pièce.

Selon une autre variante de réalisation, le dispositif comprend des moyens de déplacement de la vis agencés pour provoquer un mouvement d'éjection de la vis hors du dispositif lors de l'activation des moyens pyrotechniques.

Selon une autre variante de réalisation, les moyens de déplacement comprennent un plan incliné formé sur le sectionneur, le plan incliné est agencé pour se glisser sous l'extrémité de la vis.

Selon une autre variante de réalisation, le sectionneur est agencé pour bloquer la rotation de l'écrou.

Selon une autre variante de réalisation, le dispositif comprend des premiers moyens de fixations sur un support, l'écrou étant positionné entre les moyens d'actionnement pyrotechnique et les premiers moyens de fixation de sorte que lors de l'activation des moyens d'actionnement, le dispositif pivote autour des premiers moyens de fixation. Cela permet de libérer la vis plus rapidement.

Selon une autre variante de réalisation, dispositif comprend des deuxièmes moyens de maintien, agencés mobiles ou sécables par rapport au support, l'écrou étant positionné entre les premiers et deuxièmes moyens de maintien. Cela permet d'améliorer la fixation du dispositif lorsqu'il n'est pas actionné tout en permettant une libération rapide de la vis lors de l'activation du dispositif. En effet les deuxièmes moyens de maintiens sont agencés pour se libérer lors de l'activation pour permettre le pivotement du dispositif autour des premiers moyens de maintien.

Un deuxième aspect de l'invention concerne un véhicule automobile équipé d'un dispositif pyrotechnique de libération d'écrou selon le premier aspect de l'invention.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :

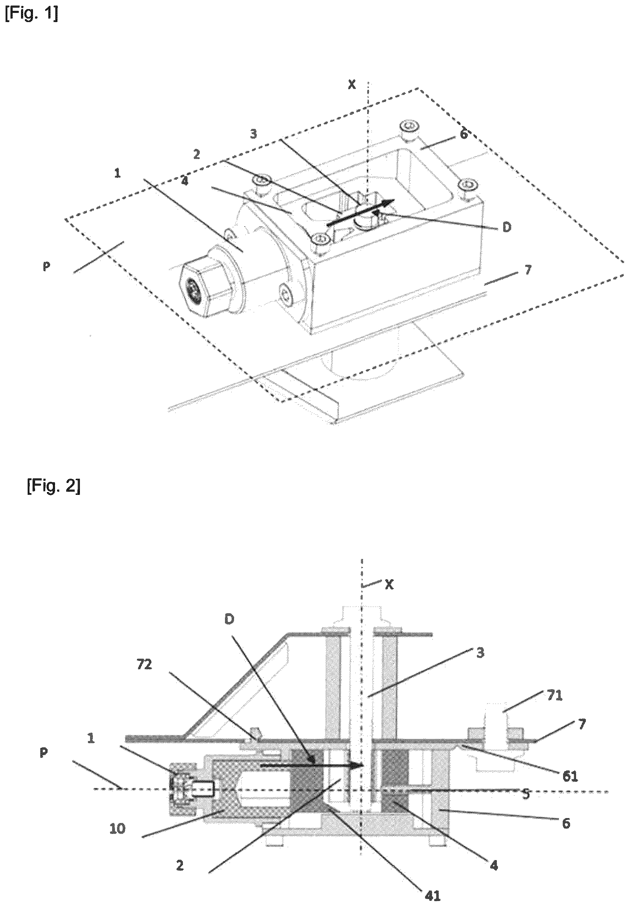

[Fig.1] représente une vue en perspective du dispositif pyrotechnique de libération d'écrou selon une variante de réalisation de l'invention.
[Fig.2] représente une vue en coupe de côté du dispositif pyrotechnique de de libération d'écrou selon l'invention.

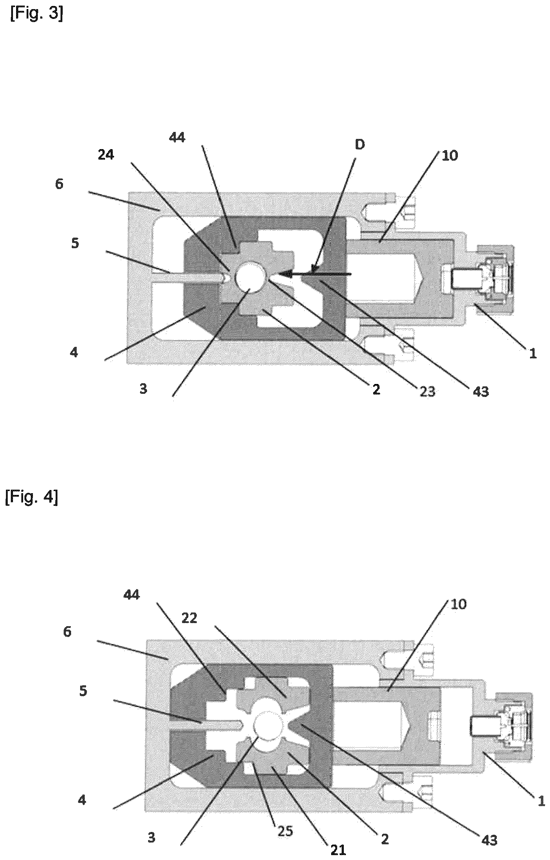

[Fig.3] représente une vue en coupe de dessus du dispositif pyrotechnique de de libération d'écrou selon l'invention en position de repos.
[Fig.4] représente une vue en coupe de dessus du dispositif pyrotechnique de de libération d'écrou selon l'invention après activation

En référence à ces dessins, le dispositif pyrotechnique de libération d'écrou selon l'invention comporte essentiellement un sectionneur 4 actionné selon une direction d'activation D rectiligne pour diviser un écrou 2 sur lequel est vissée une vis 3. La division de l'écrou 2 provoque alors la libération de la vis 3. On entend par direction d'activation D, la direction suivie par le sectionneur 4 lors de l'activation du dispositif de libération de l'écrou 2.

Selon l'invention, la direction d'activation D du sectionneur 4 est comprise dans un plan P séquent avec l'axe longitudinal X de la vis 3. En d'autres termes, la direction d'activation D est non parallèle à l'axe longitudinal X de la vis 3.

Selon l'invention, le déplacement du sectionneur 4 est assuré par des moyens pyrotechnique 1 et par exemple par un piston 10. L'ensemble sectionneur 4, écrou 2 sont montés par exemple dans un boitier 6. Le sectionneur 4 est monté coulissant dans le boitier 6 selon la direction d'activation D. Les moyens pyrotechniques 1 et le piston 10 sont par exemple montés sur une première paroi extérieure du boitier 6. Un orifice est ménagé dans la première paroi extérieure du boitier 6 pour le passage du piston 10. La vis 3 pénètre donc dans le boitier 6 via une deuxième paroi extérieure du boitier 6 pour venir s'engager dans l'écrou 4. Selon une variante de réalisation, le sectionneur 4 et le piston 10 sont formés d'une seule pièce pour le montage dans le boitier 6.

Le dispositif selon l'invention peut comprendre également un appui 5 agencé pour soutenir l'écrou 2 selon la direction d'activation D du sectionneur 4. En d'autres termes, l'appui 5 est placé sensiblement dans la même direction que la direction d'activation D. En maintenant ponctuellement l'écrou 2 pendant l'activation du sectionneur 4, l'appui 5 permet de limiter la déformation de la vis 3 sans compromettre l'action de division de l'écrou 2 du sectionneur 4.

Selon une variante de réalisation, l'appui pourrait soutenir directement la vis 3. Cet appui peut soutenir une extrémité de la vis 3 ou une partie intermédiaire de la vis 3.

Selon la variante de réalisation représentée, l'appui comprend une tige 5 donc l'axe longitudinal Y est à la fois parallèle à la direction d'activation D et sensiblement perpendiculaire à l'axe longitudinal X de la vis 3. Une extrémité libre 50 de la tige 5 est à proximité immédiate ou en contact avec l'écrou 3. D'autres formes d'appui 5 peuvent également être envisagées, comme par exemple une languette ou un plot. Selon la variante de réalisation représentée, la tige 5 est formée à partir d'une troisième paroi extérieure du boitier 6, par exemple située en face de la première paroi extérieur comportant les moyens pyrotechnique 1.

Pour diviser l'écrou 3, le sectionneur 4 comprend une lame ou un poinçon 43. La forme de la lame ou du poinçon 43 est agencé pour assurer la division de l'écrou en au moins 2 parties selon son axe longitudinal, par exemple en étant de forme évasée ou conique.

Selon une variante de réalisation, l'écrou 3 est monobloc avant activation du dispositif selon l'invention. Afin de faciliter sa division, l'écrou 3 comprend au moins une zone d'affaiblissement 23, 24. Une première zone d'affaiblissement est formée par exemple, en vis-à-vis du poinçon ou de la lame 43 du sectionneur 4. Une première zone d'affaiblissement est formée, par exemple, en vis-à-vis de l'extrémité libre 50 de la tige 5.

Le sectionneur 4 peut également comprendre des moyens de blocage en rotation de l'écrou 2. Ces moyens de blocage en rotation assurent un montage plus facile de la vis 3. En effet, les moyens de blocage en rotation du sectionneur 45 sont agencés pour maintenir l'écrou 2 pendant le vissage de la vis 3. Ces moyens de blocage comprennent par exemple un épaulement 44 venant coopérer avec un épaulement 24 correspondant de l'écrou 2.

Selon la variante de réalisation représentée, le sectionneur 4 est une pièce cylindrique creuse de section globalement rectangulaire. Une première face intérieure comprend le poinçon ou la lame 43. La face opposée à cette première intérieure comprend l'épaulement 44 de blocage de l'écrou 2. Les parois joignant ces deux faces opposées forment les parois de coulissement du sectionneur 4 dans le boitier 6.

L'épaulement 44 de blocage de l'écrou est agencé de sorte à maintenir l'écrou 2 jusqu'à l'entrée en contact du poinçon ou de la lame 43 avec l'écrou 2.

Selon une variante de réalisation, des moyens d'amortissement sont agencés par exemple entre le boitier 6 et le sectionneur 4 afin de limiter l'effet de rebond lors de l'actionnement du dispositif selon l'invention. Les moyens d'amortissement (non représentés) comprennent par exemple un élément déformable.

Les dimensions du poinçon ou de la lame 43 sont choisies pour que même lors de l'activation du dispositif, le poinçon ou la lame 43 ne viennent pas en contact avec la vis 2.

De même, selon une variante de réalisation, le dispositif de libération d'écrou comprend des moyens d'éjection de la vis 3 après division de l'écrou 2. Ces moyens d'éjection sont agencés pour faciliter la libération de la vis 3 lors de l'activation du sectionneur 4. Selon une variante de réalisation, les moyens d'éjection 41 comprennent un plan incliné 41. Le plan incliné 41 est situé sous le poinçon ou la lame 43 du sectionneur 4 de sorte à pouvoir se glisser sous une extrémité de la vis 3 lors du coulissement du sectionneur 4 et donc appliquer un effort de poussée sur la vis pour la faire sortir du boîtier 6. Selon une autre variante de réalisation, les moyens d'éjection comprenant un moyen élastique de type ressort monté en contrainte dans le boitier 6 sous la vis 3. Lors de la division de l'écrou 2, le ressort pousse alors la vis 3 hors du boitier 6.

Le boitier 6 peut être fixé sur un support 7. Pour ce faire, des premiers moyens de fixation comprennent par exemple une vis 71 fixant le boitier 6 sur le support 7. La vis 71 est par exemple positionnée de sorte que lors de l'activation des moyens d'actionnement, le boitier 6 pivote autour de la vis de sorte à éloigner l'écrou 2 du support 7. Pour ce faire, une fois monté sur le support 7, l'écrou 2 est positionné entre les moyens pyrotechnique 1 et la vis 71. En particulier, pour favoriser le pivotement, une zone de faiblesse 61 peut être prévue sur le boitier, entre l'écrou 2 et la vis 71. Des deuxièmes moyens de fixation 72 peuvent également être prévus pour le montage du boitier 6 sur le support 7. L'écrou 2 est positionné entre les premiers 71 et deuxièmes 72 moyens de fixation du boitier 6. Les deuxièmes moyens de fixation comprennent un ergot 72 venant se clipser sur le support 7. L'ergot 72 est par exemple sécable de sorte à céder lors de l'activation des moyens pyrotechniques et à permettre de libérer facilement la vis lorsque l'écrou 2 est divisé. Les deuxièmes moyens de fixation facilitent le montage du dispositif sur le support 7

Le dispositif de libération d'écrou 2 fonctionne de la manière suivante. La vis 3 est tout d'abord vissée sur le boitier 6 au niveau de l'écrou 2. Le sectionneur 4 est alors en position de repos. Le poinçon ou la lame 43 est en vis-à-vis de la première zone d'affaiblissement 23. A l'opposé, la tige 6 est en vis-à-vis de la deuxième zone d'affaiblissement 24 de l'écrou 2. Lors de l'activation des moyens pyrotechnique 1, le piston 10 provoque le déplacement en translation selon la direction d'activation D du sectionneur 4. La lame 43 du sectionneur 4 vient percuter l'écrou 2 qui se divise en au moins deux portions 21, 22 au niveau des zones d'affaiblissement 23, 24. Lors de l'impact, la tige 6 exerce un maintien de la vis 3 qui limite ou empêche la déformation de la vis 3. La vis 3 est alors libérée.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. [Dispositif de libération d'écrou comprenant :
- des moyens d'actionnement pyrotechnique (1)
- un écrou (2) agencé pour maintenir une vis (3) comprenant un axe longitudinal (X)
- un sectionneur (4) agencé pour translater selon une direction d'activation, sous l'action des moyens d'actionnement pyrotechnique (1), de sorte à diviser l'écrou (2) en au moins deux parties (21, 22),
**caractérisé en ce que**
le mouvement de translation du sectionneur (4) est situé dans un plan séquent avec l'axe longitudinal (X) de la vis (3).

2. Dispositif selon la revendication 1 **caractérisé en ce qu'**il comprend un appui (5) agencé pour soutenir l'écrou (2) selon la direction d'activation du sectionneur (4).

3. Dispositif selon la revendication 2 **caractérisé en ce que** l'appui comprend une tige (5) ayant un axe longitudinal (X) sensiblement parallèle à la direction d'activation et sensiblement perpendiculaire à l'axe longitudinal de la vis (3).

4. Dispositif selon l'une quelconque des revendications précédentes **caractérisé en ce que** l'écrou est monobloc (2).

5. Dispositif selon la revendication précédente **caractérisé en ce que** l'écrou (2) comprend une zone de fragilisation (23, 24) agencée pour provoquer la division de l'écrou (2) lors de l'actionnement du sectionneur (4).

6. Dispositif selon l'une quelconque des revendications précédentes **caractérisé en ce que** le sectionneur (4) est monté coulissant dans un boitier (6), et le dispositif comprend des moyens d'amortissement agencés entre le boitier (6) et le sectionneur (4) pour amortir le mouvement du sectionneur (4) lors de l'activation des moyens pyrotechniques.

7. Dispositif selon l'une quelconque des revendications précédentes, caractérisé en que les moyens d'actionnement pyrotechnique (1) comprennent un piston (10) agencé pour translater le sectionneur (4) selon la direction d'activation.

8. Dispositif selon la revendication précédente caractérisé en que le piston (10) et le sectionneur (4) forment une seule pièce.

9. Dispositif selon l'une quelconque des revendications précédentes caractérisé en qu'il comprend des moyens de déplacement (41) de la vis (3) agencés pour provoquer un mouvement d'éjection de la vis (3) hors du dispositif lors de l'activation des moyens pyrotechniques.

10. Dispositif selon la revendication précédente caractérisé en que les moyens de déplacement comprennent un plan incliné (41) formé sur le sectionneur (4), le plan incliné (41) est agencé pour se glisser sous l'extrémité de la vis (3).

11. Dispositif selon l'une quelconque des revendications précédentes caractérisé en que le sectionneur (4) est agencé pour bloquer la rotation de l'écrou (4).

12. Dispositif selon l'une quelconque des revendications précédentes **caractérisé en ce qu'**il comprend des premiers moyens de fixations (71) sur un support (7), l'écrou (2) étant positionné entre les moyens d'actionnement pyrotechnique (1) et les premiers moyens de fixation (71) de sorte que lors de l'activation des moyens d'actionnement, le dispositif pivote autour des premiers moyens de fixation (71)

13. Dispositif selon la revendication précédente caractérisé en qu'il comprend des deuxièmes moyens de fixation (72), agencés mobiles ou sécables par rapport au support (7), l'écrou (2) étant positionné entre les premiers (71) et deuxièmes (72) moyens de maintien.

14. Véhicule automobile comprenant le dispositif de libération d'écrou selon l'une des revendications précédentes.]

## Patentansprüche

1. [Vorrichtung zum Lösen von Muttern, umfassend:
- pyrotechnische Betätigungsmittel (1)
- eine Mutter (2), die angeordnet ist, um eine Schraube (3) zu halten, die eine längliche Achse (X) umfasst
- einen Trennschalter (4), der angeordnet ist, um sich unter der Wirkung der pyrotechnischen Betätigungsmittel (1) in einer Aktivierungsrichtung translatorisch zu bewegen, so dass die Mutter (2) in mindestens zwei Teile (21, 22) geteilt wird,
**dadurch gekennzeichnet, dass**
die Translationsbewegung des Trennschalters (4) sich in einer mit der Längsachse (X) der Schraube (3) zusammenhängenden Ebene befindet.

2. Vorrichtung nach Anspruch 1, **dadurch gekennzeichnet, dass** sie eine Auflage (5) umfasst, die angeordnet ist, um die Mutter (2) entlang der Aktivierungsrichtung des Trennschalters (4) zu stützen.

3. Vorrichtung nach Anspruch 2, **dadurch gekennzeichnet, dass** die Auflage einen Schaft (5) mit einer Längsachse (X) umfasst, die im Wesentlichen parallel zur Aktivierungsrichtung und im Wesentlichen senkrecht zur Längsachse der Schraube (3) verläuft.

4. Vorrichtung nach einem der vorstehenden Ansprüche,
**dadurch gekennzeichnet, dass** die Mutter einstückig (2) ist.

5. Vorrichtung nach dem vorstehenden Anspruch,
**dadurch gekennzeichnet, dass** die Mutter (2) einen Schwächungsbereich (23, 24) umfasst, der angeordnet ist, um bei Betätigung des Trennschalters (4) eine Teilung der Mutter (2) zu bewirken.

6. Vorrichtung nach einem der vorstehenden Ansprüche,
**dadurch gekennzeichnet, dass** der Trennschalter (4) in einem Gehäuse (6) verschiebbar gelagert ist, und die Vorrichtung zwischen dem Gehäuse (6) und dem Trennschalter (4) angeordnete Dämpfungsmittel umfasst, um die Bewegung des Trennschalters (4) bei der Aktivierung der pyrotechnischen Mittel zu dämpfen.

7. Vorrichtung nach einem der vorstehenden Ansprüche,
**dadurch gekennzeichnet, dass** die pyrotechnischen Betätigungsmittel (1) einen Kolben (10) umfassen, der angeordnet ist, um den Trennschalter (4) in der Aktivierungsrichtung translatorisch zu bewegen.

8. Vorrichtung nach dem vorstehenden Anspruch,
**dadurch gekennzeichnet, dass** der Kolben (10) und der Trennschalter (4) ein einzelnes Stück bilden.

9. Vorrichtung nach einem der vorstehenden Ansprüche,
**dadurch gekennzeichnet, dass** sie Mittel zum Bewegen (41) der Schraube (3) umfasst, die angeordnet sind, um eine Auswurfbewegung der Schraube (3) aus der Vorrichtung bei der Aktivierung der pyrotechnischen Mittel zu bewirken.

10. Vorrichtung nach dem vorstehenden Anspruch,
**dadurch gekennzeichnet, dass** die Bewegungsmittel eine auf dem Trennschalter (4) ausgebildete schiefe Ebene (41) umfassen, wobei die schiefe Ebene (41) so angeordnet ist, dass sie unter das Ende der Schraube (3) gleitet.

11. Vorrichtung nach einem der vorstehenden Ansprüche,
**dadurch gekennzeichnet, dass** der Trennschalter (4) so angeordnet ist, dass er die Drehung der Mutter (4) blockiert.

12. Vorrichtung nach einem der vorstehenden Ansprüche,
**dadurch gekennzeichnet, dass** sie erste Befestigungsmittel (71) auf einem Träger (7) umfasst, wobei die Mutter (2) zwischen den pyrotechnischen Betätigungsmitteln (1) und den ersten Befestigungsmitteln (71) so positioniert ist, dass bei Aktivierung der Betätigungsmittel die Vorrichtung um die ersten Befestigungsmittel (71) schwenkt.

13. Vorrichtung nach dem vorstehenden Anspruch,
**dadurch gekennzeichnet, dass** sie zweite Befestigungsmittel (72) umfasst, die in Bezug auf den Träger (7) beweglich oder teilbar angeordnet sind, wobei die Mutter (2) zwischen den ersten (71) und zweiten (72) Haltemitteln positioniert ist.

14. Kraftfahrzeug, umfassend die Vorrichtung zum Lösen von Muttern nach einem der vorstehenden Ansprüche.]

## Claims

1. Nut releasing device, comprising:
- pyrotechnic actuation means (1)
- a nut (2) arranged to hold a screw (3) comprising a longitudinal axis (X)
- a cutter (4) arranged to move in translation in an activation direction, under the action of the pyrotechnic actuation means (1), so as to split the nut (2) into at least two parts (21, 22),
**characterized in that**
the translational movement of the cutter (4) is located in a plane which intersects with the longitudinal axis (X) of the screw (3).

2. Device according to claim 1, **characterized in that** it comprises a support (5) arranged to support the nut (2) in the activation direction of the cutter (4).

3. Device according to claim 2, **characterized in that** the support comprises a rod (5) having a longitudinal axis (X) which is substantially parallel to the activation direction and substantially perpendicular to the longitudinal axis of the screw (3).

4. Device according to any one of the preceding claims,
**characterized in that** the nut consists of a single piece (2).

5. Device according to the preceding claim, **characterized in that** the nut (2) comprises a weakening zone (23, 24) which is arranged to cause the nut (2) to be split when the cutter (4) is actuated.

6. Device according to any one of the preceding claims,
**characterized in that** the cutter (4) is slidably mounted in a housing (6), and the device comprises damping means arranged between the housing (6) and the cutter (4) to damp the movement of the cutter (4) during the activation of the pyrotechnic means.

7. Device according to any one of the preceding claims,
**characterized in that** the pyrotechnic actuation means (1) comprise a piston (10) arranged to move the cutter (4) in translation in the activation direction.

8. Device according to the preceding claim, **characterized in that** the piston (10) and the cutter (4) form a single piece.

9. Device according to any one of the preceding claims,
**characterized in that** it comprises means (41) for moving the screw (3), which means are arranged to cause a movement of ejecting the screw (3) out from the device during the activation of the pyrotechnic means.

10. Device according to the preceding claim, **characterized in that** the movement means comprise an inclined plane (41) formed on the cutter (4), the inclined plane (41) being arranged to slide under the end of the screw (3).

11. Device according to any one of the preceding claims,
**characterized in that** the cutter (4) is arranged to block the rotation of the nut (4).

12. Device according to any one of the preceding claims,
**characterized in that** it comprises first fastening means (71) for fastening to a base (7), the nut (2) being positioned between the pyrotechnic actuation means (1) and the first fastening means (71) so that, during the activation of the actuation means, the device pivots around the first fastening means (71).

13. Device according to the preceding claim, **characterized in that** it comprises second fastening means (72), arranged to be movable or separable relative to the base (7), the nut (2) being positioned between the first (71) and second (72) holding means.

14. Motor vehicle comprising the nut releasing device according to one of the preceding claims.
